# EUROPEAN PATENT APPLICATION

(11) **EP 4 166 215 A1**
(43) Date of publication of application: **19.04.2023**
(21) Application number: 21306430.6
(22) Date of filing: 12.10.2021
(51) Int. Cl.: B01D 51/10, B01D 53/14, C01B 32/50

(54) **A CARBON DIOXIDE REMOVAL INSTALLATION AND ASSOCIATED METHOD**

(71) Applicant: TotalEnergies OneTech, 92400 Courbevoie (FR)
(72) Inventor: JAUMARD, Benjamin, 92100 BOULOGNE-BILLANCOURT (FR); LETHIER, Samuel, HOUSTON, TX-77041 (US); DEVAUX, Fabrice, 78600 MAISONS LAFFITTE (FR)
(74) Representative: Lavoix

(57) **Abstract**

The invention relates to a carbon dioxide removal installation (10) comprising:
- a bio-energy unit (12) adapted to be supplied with a quantity of biomass (24) and/or of biofuel and/or biogas, and to produce a flue gas stream (26) from a combustion of the quantity of biomass (24) and/or of biofuel and/or of biogas, the flue gas stream (26) comprising carbon dioxide,
- a single carbon capture unit (14) adapted to collect both at least a part of the flue gas stream (26) produced by the bio-energy unit (12) and an air stream (32) from atmosphere (34), said air stream (32) comprising carbon dioxide, the carbon capture unit (14) being adapted to produce a carbon concentrated stream of carbon dioxide (36) from said flue gas stream (26) and air stream (32),
- a processing unit (16) adapted to process the carbon concentrated stream of carbon dioxide (36).

## Description

The present invention deals with a carbon dioxide removal installation.

The invention also deals with a method for carbon dioxide removal using such a carbon dioxide removal installation.

Direct Air Capture (DAC) is a technology that enables carbon dioxide removal from the atmosphere. This technology has several advantages in terms of flexibility in site location, low land footprint, and potentially limitless scale.

However, this technology suffers from high costs and substantial energy requirements. Moreover, to maximize the amount of carbon dioxide removed from the atmosphere, the energy source must have a low a carbon intensity. Renewable energies typically have a very low greenhouse gas (GHG) intensity, but at best can be carbon (or GHG) neutral.

An aim of the invention is to provide a carbon dioxide removal installation which improves the removed quantity of carbon dioxide while reducing the operating costs.

To this end, the invention proposes a carbon dioxide removal installation comprising:
- a bio-energy unit adapted to be supplied with a quantity of biomass and/or of biofuel and/or biogas, and to produce a flue gas stream from a combustion of the quantity of biomass and/or of biofuel and/or of biogas, the flue gas stream comprising carbon dioxide,
- a single carbon capture unit adapted to collect both at least a part of the flue gas stream produced by the bio-energy unit and an air stream from atmosphere, said air stream comprising carbon dioxide, the carbon capture unit being adapted to produce a carbon concentrated stream of carbon dioxide from said flue gas stream and air stream,
- a processing unit adapted to process the carbon concentrated stream of carbon dioxide.

In other embodiments, the installation comprises one or several of the following features, taken in isolation or any technically feasible combination:
- the carbon capture unit is adapted to collect a total flue gas stream produced by the bio-energy unit;
- the concentration of carbon dioxide in the flue gas stream is comprised between 10% and 15%;
- the bio-energy unit is adapted to produce electricity and/or heat from the combustion of the quantity of biomass and/or of biofuel and/or of biogas, and adapted to at least partially, preferably completely, supply the carbon capture unit with electricity and/or heat;
- the processing unit is a carbon storage unit adapted to store the carbon concentrated stream of carbon dioxide into the geologic formations, or a conversion unit adapted to produce at least one carbon-derived product from the carbon concentrated stream of carbon dioxide;
- the carbon-derived product is chosen among an e-fuel, a building material and a plastic;
- the installation further comprises a blower unit adapted to supply the air stream to the carbon capture unit, said blower unit comprising at least one blower;
- the installation further comprises a conditioning unit adapted to condition the carbon concentrated stream of carbon dioxide for a transport between the carbon capture unit and the processing unit;
- the bio-energy unit is adapted to completely supply with electricity at least one unit of the installation chosen among the blower unit and/or the conditioning unit;
- the installation further comprises a heat pump to convert at least a part of the produced electricity into heat; and
- the flue gas stream comprises carbon dioxide and additional components, the carbon capture unit being adapted to separate the carbon dioxide from the additional components.

The invention also deals with a method for carbon dioxide removal, said method comprising the following steps:
- providing an installation as described above,
- supplying the bio-energy unit with a quantity of biomass and/or of biofuel and/or of biogas,
- producing a flue gas stream from a combustion of the quantity of biomass and/or of biofuel and/or of biogas,
- collecting both at least a part of the flue gas stream from the bio-energy unit and an air stream from the atmosphere,
- producing a carbon concentrated stream of carbon dioxide from said flue gas stream and air stream, and
- processing the carbon concentrated stream of carbon dioxide.

In other embodiments, the method comprises one or several of the following features, taken in isolation or any technically feasible combination:
- the method comprises collecting the total flue gas stream produced by the bio-energy unit;
- the method further comprises producing electricity and/or heat from the combustion of the quantity of biomass and/or of biofuel and/or of biogas, and at least partially, preferably completely, supplying the carbon capture unit with said electricity and/or heat;
- processing the carbon concentrated stream of carbon dioxide comprises storing the carbon concentrated stream of carbon dioxide into the geologic formations, or producing at least one carbon-derived product from the carbon concentrated stream of carbon dioxide.

The invention and its advantages will be better understood upon reading the following description, given solely by way of example and with reference to the appended drawings, in which:
- Figure 1 is a schematic block diagram of an installation according to the invention, and
- Figure 2 is a schematic block diagram of a method for carbon dioxide removal using the installation of figure 1.

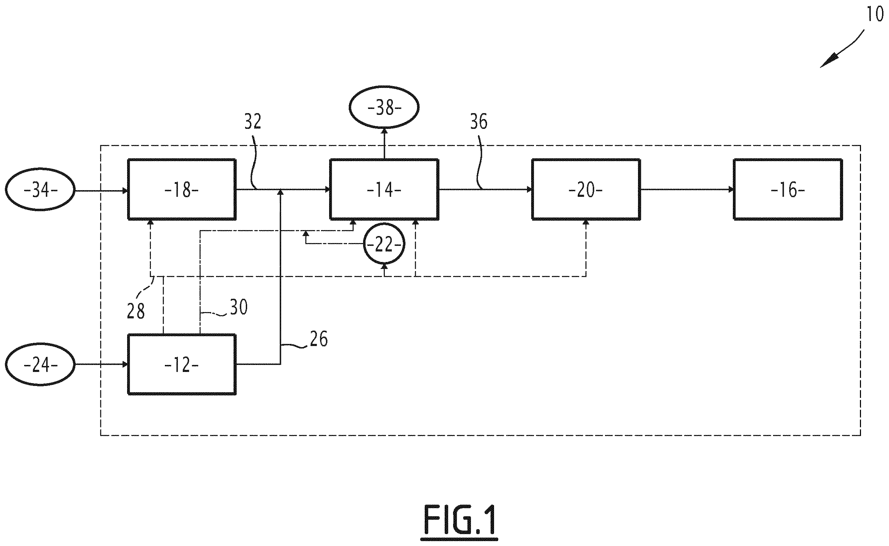

Figure 1 shows a carbon dioxide removal installation 10 according to the invention.

The carbon dioxide removal installation 10 comprises a bio-energy unit 12, a single carbon capture unit 14 connected to the bio-energy unit 12 and a processing unit 16 connected to the carbon capture unit 14.

Optionally, the carbon dioxide removal installation 10 comprises a blower unit 18 connected to the carbon capture unit 14, and/or a conditioning unit 20 arranged between the carbon capture unit 14 and the processing unit 16, and/or at least one heat pump 22.

The bio-energy unit 12 is adapted to be supplied with a quantity of biomass 24 and to produce a flue gas stream 26 from a combustion of the quantity of biomass 24.

In addition or in a variant, the bio-energy unit 14 is adapted to be supplied with a quantity of biofuel and to produce a flue gas stream 26 from a combustion of the quantity of biofuel.

In addition or in a variant, the bio-energy unit 14 is adapted to be supplied with a quantity of biogas and to produce a flue gas stream 26 from a combustion of the quantity of biogas.

The quantity of biomass 24 is for example wood or wood residues. This kind of biomass 24 may be directly used to supply the bio-energy unit 12, or used after have been processed for example into pellets. In another variant, the quantity of biomass 24 comprises waste elements such as agricultural waste, municipal solid waste and/or manufacturing waste. The raw biomass may be upgraded to higher grades fuels using known methods that will not be detailed in the present application.

The quantity of biofuel is for example bioethanol produced for example from sugar beets, or biodiesel produced from vegetables oils or waste oils/fats..

The quantity of biogas is for example produced by processing agricultural waste, municipal solid waste and/or manufacturing waste.

The flue gas stream 26 comprises carbon dioxide. The flue gas stream 26 also comprises additional components such as nitrogen, water, oxygen, and unburnt elements, such as carbon monoxide, volatile organic compounds, polycyclic aromatic hydrocarbons, NOx, SOx, particulates, etc.

The concentration of carbon in volume in the flue gas stream 26 is for example comprised between 10% and 15%.

Advantageously, the bio-energy unit 12 is adapted to produce electricity 28 and/or heat 30 from the combustion of the quantity of biomass 24 and/or the combustion of the quantity of biofuel. The bio-energy unit 12 is adapted to partially supply the carbon capture unit 14 with electricity 28 and/or heat 30.

Preferably, the bio-energy unit 12 is adapted to completely supply the carbon capture unit 14 with electricity 28 and /or heat 30.

In a variant, the bio-energy unit 12 is adapted to completely supply the carbon capture unit 14 with electricity 28.

The installation 10 may comprise a secondary energy unit (not represented) adapted to completely supply the carbon capture unit 14 with heat 30. For example, the secondary energy unit is geothermal unit.

In another variant, the secondary energy unit is adapted to completely supply the carbon capture unit 14 with electricity 28. The bio-energy unit 12 is adapted to completely supply the carbon capture unit 14 with electricity 28.

Advantageously, the bio-energy unit 12 is adapted to supply heat 30 and/or electricity 28, and preferably completely supply heat 30 and/or electricity 28, to at least one of the units of the installation 10, such as the blower unit 18 and/or the conditioning unit 20.

Preferably, the bio-energy unit 12 is adapted to completely supply heat 30 and/or electricity 28 to all of the units of the installation 10. In other words, the installation 10 is completely autonomous in term of energy, i.e. in term of heat 30 and electricity 28.

For example, the bio-energy unit 12 comprises a boiler (not represented) adapted to combust the quantity of biomass 24 and to generate steam. The bio-energy unit 12 comprises at least a steam turbine (not represented) to produce electricity 28.

The bio-energy unit 12 further comprises for example a heat recovery steam generator and/or a waste heat recovery unit (not represented) downstream the boiler to collect the remaining heat while cooling down the flue gas stream 26.

Preferably, the heat pump 22 is connected to the bio-energy unit 12 and is adapted to convert at least a part of the produced electricity 28 into heat 30 and to supply at least one unit of the installation 10. For example, as depicted by Figure 1, the heat pump 22 converts a part of the produced electricity 28 into heat 30 to supply the carbon capture unit 12.

In variant or in addition, heat 30 may be provided by a geothermal energy, and/or waste heat from a nearby facility, and/or solar thermal, etc.

The carbon capture unit 14 is adapted to collect both at least a part of the flue gas stream 26 produced by the bio-energy unit 12 and an air stream 32 from atmosphere 34. The carbon capture unit 14 is adapted to produce a carbon concentrated stream of carbon dioxide 36 from said flue gas stream 26 and air stream 32.

Preferably, the carbon capture unit 14 is adapted to collect a total flue of gas stream 26 produced by the bio-energy unit 12.

The addition of the air stream 32 into the flue gas stream 26 produced by the bio-energy unit 12 is particularly advantageous since it cools down the flue gas stream 26, reducing the size or eliminating the need for a direct contact cooler prior to the feeding of the carbon unit capture 14.

The carbon capture unit 14 is also adapted to produce a waste stream 38. The waste stream 38 mainly comprises nitrogen, carbon dioxide, etc.

The concentrated stream of carbon dioxide 36 comprises in volume for example between 75% and 100% of carbon dioxide, preferably more than 99% of carbon dioxide.

The carbon capture unit 14 is for example a post-combustion carbon dioxide capture unit based on the absorption by physical or chemical solvents, adsorption on solid media, membrane separation, cryogenics, liquefaction, etc. These technics are known for the skilled person and will be detailed here.

In a variant, the carbon capture unit 14 is a post-combustion carbon dioxide capture unit based on a combination of at least two different technics, for example, an adsorption followed by a liquefaction to concentrate and liquefy the carbon dioxide for an efficient transport.

The carbon capture unit 14 is adapted to separate the carbon dioxide from the additional components comprised in the flue gas stream 26 and in the air stream 32.

The blower unit 18 is adapted to supply the air stream 32 to the carbon capture unit 14 from the atmosphere 34. The blower unit 18 comprises for example at least one blower (not represented). The concentration of carbon dioxide in the air stream 32 is typically around 0.04%.

The conditioning unit 20 is adapted to condition the carbon concentrated stream 36 for a transport between the carbon capture unit 14 and the processing unit 16.

Typically, the conditioning unit 20 is adapted to condition the carbon concentrated stream 36 according to the nature of the transport used between the carbon capture unit 14 and the processing unit 16.

For example, the conditioning unit 20 is adapted to compress and dehydrate the carbon concentrated stream 36 and to put said carbon concentrated stream 36 into a liquid state or a supercritical state.

The carbon concentrated stream 36 is then transported to the processing unit 16.

For example, the carbon concentrated stream 36 is directly transported to the processing unit 16 for example by pipeline. When pipeline is used as mean of transport, the carbon concentrate stream 36 is preferably in a supercritical state.

In a variant, the carbon concentrated stream 36 is transported to the processing unit 16 by boat, truck and/or train. Preferably, with such a kind of means of transport, the carbon concentrate stream 36 is in a liquid state.

According to a specific embodiment, the installation 10 may comprise an additional concentrating unit (not represented) arranged between the carbon capture unit 14 and the conditioning unit 20. The additional concentrating unit is adapted to further concentrate and purify the carbon concentrate stream 36 produced by the carbon capture unit 14. For example, the concentration of the carbon concentrate stream 36 is made using a cryogenic distillation or using a membrane separation.

The processing unit 16 is adapted to process the carbon concentrated stream 36.

The processing unit 16 is for example a carbon storage unit adapted to store the carbon concentrated stream 36 into the geologic formations.

In a variant, the processing unit 16 is a conversion unit adapted to produce at least one carbon-derived product from the carbon concentrated stream 36.

For example, the carbon-derived product is an e-fuel.

For example, the processing unit 16 comprises a hydrogen production unit adapted to extract hydrogen from water and to combine the produced hydrogen with the carbon concentrated stream 36 into e-fuel, preferably liquid e-fuel, such as e-jet.

In a variant, the carbon-derived product is a building material, such as a concrete. For example, the processing unit 16 comprises a unit adapted to use the carbon concentrated stream 36 in concrete curing or mixing.

In another variant, the carbon-derived product is a polymer, for example a plastic obtained from a polyolefin made from olefins, which are polymerized into polyethylene/polypropylene.

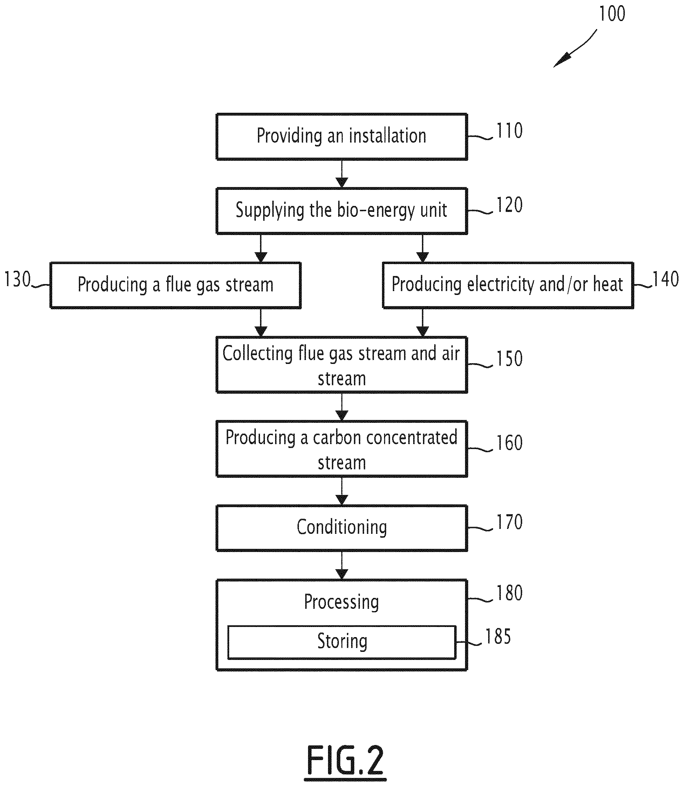

A method 100 for carbon dioxide removal is now described in reference to figure 2.

The method 100 comprises providing 110 an installation 10 as disclosed above and supplying 120 the bio-energy unit 12 with a quantity of biomass 24.

In a variant, the method 100 comprises supplying the bio-energy unit 12 with at least a part of biofuel, preferably completely supplying the bio-energy unit 12 with a quantity of biofuel.

The method 100 comprises producing 130 a flue gas stream 26 from a combustion of the quantity of biomass 24 and/or of biofuel.

Advantageously, the method comprises producing 140 electricity 28 and/or heat 30 from the combustion of the quantity of biomass 24 and/or of biofuel and/or biogas, and supplying, preferably completely, the carbon capture unit 14 with electricity 28 and/or heat 30 produced by the bio-energy unit 12.

Advantageously, the method 100 comprises producing 140 electricity 28 and/or heat 30 from the combustion of the quantity of biomass and/or of biofuel and/or biogas, and supplying said heat 30 and/or electricity 28, and preferably completely supplying at least one of the units of the installation 10, such as the blower unit 18 and/or the conditioning unit 20, with said electricity 28 and/or said heat 30.

Preferably, the method 100 comprises completely supplying heat 30 and/or electricity 28 to all of the units of the installation. In other words, no other heat source or electricity source is needed to the operation of the installation 10.

This step may comprise converting at least a part of the produced electricity 28 into heat 30 using a heat pump 22.

Then, at least a part of the flue gas stream 26 from the bio-energy unit 12 and an air stream 32 from the atmosphere 34 are collected in a collecting step 150. Advantageously, the total flue gas stream 26 produced by the bio-energy unit 12 is collected.

Collecting the air stream 32 from the atmosphere 34 may for example comprise supplying the air stream 32 to the carbon capture unit 14 using at least one blower.

The flue gas stream 26 and the air stream 32 are supplied to the carbon capture unit 14 to produce a carbon concentrated stream of carbon dioxide 36 in a producing step 160. Said concentrated stream 36 is then processed by the processing unit 16.

Preferably, before transporting the concentrated stream of carbon dioxide 36 between the carbon capture unit 14 and the processing unit 16, the method 100 comprises conditioning 170 the carbon concentrated stream 36.

For example, processing 180 the carbon concentrated stream of carbon dioxide 36 comprises storing 185 the carbon concentrated stream 36 into the geologic formations, or producing at least one carbon-derived product from the carbon concentrated stream 36.

The installation 10 according to the invention is particularly advantageous since the use of a single carbon capture unit 14 supplied by both direct air and by the flue gas stream 26 the bio-energy unit 12 results in lower cost and energy demand compared to installation of the prior art while allowing processing a large quantity of carbon dioxide. Moreover, the addition of the air stream 32 into the flue gas stream 26 allows cooling down said stream 26. It allows a reduction of the size of a direct contact cooler or the elimination of the need for a direct contact cooler prior to the carbon capture unit 14.

### Example

In the following, we illustrate an example of the implementation of the carbon dioxide removal installation 10 according to figure 1 to highlight the advantages of the invention.

In this example, the bio-energy unit 12 is supplied by 246 kg of wood pellets. It produces 0.45 t of carbon dioxide with a concentration in volume of 14.3%.

The carbon capture unit 14 is a post-combustion carbon dioxide capture unit based on the absorption using monoethanolamine (MEA).

The carbon capture unit 14 collects this flue gas stream 26 and 0.66 t of carbon dioxide at 0.04% in volume from atmosphere, i.e. a total of 1.11 t of carbon dioxide at 5.8% in volume.

The carbon capture unit 14 produces a residual quantity of carbon dioxide of 0.11 t and 1 t of carbon concentrated stream 36 with a concentration of carbon dioxide at 99% in volume which can be processed, for example stored into the geologic formations.

In terms of energy, the combustion of 246 kg of wood pellets produces 198 kWh of electricity. 60 kWh supply the blower unit 18, 30 kWh supply the carbon capture unit 14 and 100 kWh supply the conditioning unit 20. 8 kWh are turned into heat 30 by the heat pump 22 to produce 0.4 GJ and supply the carbon capture unit 14. The bio-energy unit 12 also produces 3.0 GJ of heat to supply the carbon capture unit 14.

## Claims

1. A carbon dioxide removal installation (10) comprising:
- a bio-energy unit (12) adapted to be supplied with a quantity of biomass (24) and/or of biofuel and/or biogas, and to produce a flue gas stream (26) from a combustion of the quantity of biomass (24) and/or of biofuel and/or of biogas, the flue gas stream (26) comprising carbon dioxide,
- a single carbon capture unit (14) adapted to collect both at least a part of the flue gas stream (26) produced by the bio-energy unit (12) and an air stream (32) from atmosphere (34), said air stream (32) comprising carbon dioxide, the carbon capture unit (14) being adapted to produce a carbon concentrated stream of carbon dioxide (36) from said flue gas stream (26) and air stream (32),
- a processing unit (16) adapted to process the carbon concentrated stream of carbon dioxide (36).

2. The installation (10) according to claim 1, wherein the carbon capture unit (14) is adapted to collect a total flue gas stream (26) produced by the bio-energy unit (12).

3. The installation (10) according to claim 1 or 2, wherein the concentration of carbon dioxide in the flue gas stream (26) is comprised between 10% and 15%.

4. The installation (10) according to any one of claim 1 to 3, wherein the bio-energy unit (12) is adapted to produce electricity (28) and/or heat (30) from the combustion of the quantity of biomass (24) and/or of biofuel and/or of biogas, and adapted to at least partially, preferably completely, supply the carbon capture unit (14) with electricity (28) and/or heat (30).

5. The installation (10) according to any one of claims 1 to 4, wherein the processing unit (16) is a carbon storage unit adapted to store the carbon concentrated stream of carbon dioxide (36) into the geologic formations, or a conversion unit adapted to produce at least one carbon-derived product from the carbon concentrated stream of carbon dioxide (36).

6. The installation (10) according to claim 5, wherein the carbon-derived product is chosen among an e-fuel, a building material and a plastic.

7. The installation (10) according to any one of claims 1 to 6, further comprising a blower unit (18) adapted to supply the air stream (32) to the carbon capture unit (14), said blower unit (18) comprising at least one blower.

8. The installation (10) according to any one of claims 1 to 7, further comprising a conditioning unit (20) adapted to condition the carbon concentrated stream of carbon dioxide (36) for a transport between the carbon capture unit (14) and the processing unit (16).

9. The installation (10) according to claim 7 or 8, wherein the bio-energy unit (12) is adapted to completely supply with electricity (28) at least one unit of the installation (10) chosen among the blower unit (18) and/or the conditioning unit (20).

10. The installation (10) according to any one of claims 1 to 9, further comprising a heat pump (22) to convert at least a part of the produced electricity (28) into heat (30).

11. The installation (10) according to any one of claims 1 to 10, wherein the flue gas stream (26) comprises carbon dioxide and additional components, the carbon capture unit (14) being adapted to separate the carbon dioxide from the additional components.

12. A method (100) for carbon dioxide removal, said method comprising the following steps:
- providing (110) an installation (10) according to any one of claims 1 to 11,
- supplying (120) the bio-energy unit (12) with a quantity of biomass (24) and/or of biofuel and/or of biogas,
- producing (130) a flue gas stream (26) from a combustion of the quantity of biomass (24) and/or of biofuel and/or of biogas,
- collecting (150) both at least a part of the flue gas stream (26) from the bio-energy unit (12) and an air stream (32) from the atmosphere (34),
- producing a carbon (160) concentrated stream of carbon dioxide (36) from said flue gas stream (26) and air stream (32), and
- processing (180) the carbon concentrated stream of carbon dioxide (36).

13. The method (100) according to claim 12, comprising collecting (150) the total flue gas stream (26) produced by the bio-energy unit (12).

14. The method (100) according to claim 12 or 13, further comprising producing (140) electricity (28) and/or heat (30) from the combustion of the quantity of biomass (24) and/or of biofuel and/or of biogas, and at least partially, preferably completely, supplying the carbon capture unit (14) with said electricity (28) and/or heat (30).

15. The method (100) according to any one of claims 12 to 14, wherein processing (180) the carbon concentrated stream of carbon dioxide (36) comprises storing (185) the carbon concentrated stream of carbon dioxide (36) into the geologic formations, or producing at least one carbon-derived product from the carbon concentrated stream of carbon dioxide (36).
